# EUROPEAN PATENT APPLICATION

(11) **EP 4 503 332 A1**
(43) Date of publication of application: **05.02.2025**
(21) Application number: 24191922.4
(22) Date of filing: 30.07.2024
(51) Int. Cl.: H01Q 3/08, H01Q 3/14, H01Q 15/08, H01Q 19/06

(54) **ANTENNA ASSEMBLY WITH ADJUSTABLE GAIN LENS**

(30) Priority: 31.07.2023 US 202318362464
(71) Applicant: The Boeing Company, Arlington, VA 22202 (US)
(72) Inventor: CHEUNG, James, Arlington, 22202 (US)
(74) Representative: Morrall, Jonathan Ian McLachlan

(57) **Abstract**

An adjustable gain antenna including an RF emitter configured to emit an RF signal along an emitter axis. A first refractive lens having an optical axis collinear with the emitter axis and a second refractive lens having an optical axis collinear with the emitter axis with the first refractive lens located between the RF emitter and the second refractive lens. A drive mechanism mechanically linked to the first refractive lens and the second refractive lens, wherein the drive mechanism is configured to move the first refractive lens and the second refractive lens longitudinally along the emitter axis to vary a gain of the RF emitter.

## Description

### FIELD

The present disclosure relates to the field of antennas and in particular radio frequency (RF) antennas having adjustable gain.

### BACKGROUND

Antennas generally include an emitter with at least one focusing element that directs electromagnetic radiation towards the direction of interest. The size, shape, and longitudinal position of the focusing element along the emitter axis contributes to a gain that the antenna can produce. Generally, the antenna could have a low gain and provide a wide field of view, or the antenna could have a high gain and provide a narrow field of view. This field of view is a parameter of interest in both remote sensing and communications applications. While low-gain antennas produce a wider field of view than high-gain antennas, they typically radiate less energy at the direction of interest.

### SUMMARY

[The summary will be completed when the claims are finalized. The summary will simply restate and follow the claims.]

An adjustable gain antenna is disclosed herein. The antenna includes an RF emitter configured to emit an RF signal along an emitter axis. A first refractive lens having an optical axis collinear with the emitter axis and a second refractive lens having an optical axis collinear with the emitter axis with the first refractive lens located between the RF emitter and the second refractive lens. A drive mechanism mechanically linked to the first refractive lens and the second refractive lens, wherein the drive mechanism is configured to move the first refractive lens and the second refractive lens longitudinally along the emitter axis to vary a gain of the RF emitter.

In one or more embodiments of the antenna, the first refractive lens and the second refractive lens are comprised of at least one of PLA (polylactic acid) or ABS (acrylonitrile butadiene styrene).

In one or more embodiments of the antenna, the first refractive lens and the second refractive lens are each coated in an RF-transparent material.

In one or more embodiments of the antenna, the RF-transparent material includes Aptek 2515AB.

In one or more embodiments of the antenna, the RF emitter is a single aperture RF emitter.

In one or more embodiments of the antenna, the RF emitter is configured to generate a circular polarization.

In one or more embodiments of the antenna, the RF emitter is configured to generate a linear polarization.

In one or more embodiments of the antenna, the RF emitter is configured to generate an elliptical polarization.

In one or more embodiments of the antenna, the first refractive lens and the second refractive lens are injection molded.

In one or more embodiments of the antenna, the first refractive lens and the second refractive lens are 3D printed.

In one or more embodiments of the antenna, the RF emitter is circular horn antenna.

In one or more embodiments of the antenna, the RF signal includes a frequency range of 26.5-40 gigahertz (GHz).

In one or more embodiments of the antenna, the antenna includes at least one additional refractive lens positioned along the emitter axis with the drive mechanism configured to adjust the at least one additional refractive lens.

In one or more embodiments of the antenna, the antenna includes a mounting assembly for selecting a field of view of the antenna.

A method of operating an antenna assembly is disclosed herein, the method includes determining a gain for the antenna assembly and positioning at least one of a first refractive lens or a second refractive lens each in a first longitudinal position along an emitter axis of an RF emitter. An RF beam is emitted along the emitter axis with the RF emitter.

In one or more embodiments of the method, the method includes positioning both the first refractive lens and the second refractive lens along the emitter axis.

In one or more embodiments of the method, the method includes rotating the antenna assembly about a point to vary a field of view of the antenna assembly in the azimuth and elevation angles.

In one or more embodiments of the method, the RF emitter is a single aperture RF emitter.

In one or more embodiments of the method, the method includes positioning the first refractive lens and the second refractive lens each in a second longitudinal position along the emitter axis to generate a second gain.

An antenna assembly is disclosed herein. The antenna assembly includes an RF emitter configured to emit an RF signal along an emitter axis. A first refractive lens having an optical axis collinear with the emitter axis and a second refractive lens having an optical axis collinear with the emitter axis with the first refractive lens located between the RF emitter and the second refractive lens. A drive mechanism mechanically linked to the first refractive lens and the second refractive lens, with the drive mechanism configured to move the first refractive lens and the second refractive lens longitudinally along the emitter axis to vary a gain of the RF emitter. A mounting assembly for selecting a field of view of an adjustable gain antenna. A controller configured to determine a gain for the antenna assembly and position at least one of a first refractive lens or a second refractive lens each in a first longitudinal position along an emitter axis of an RF emitter. The controller is also configured to direct an RF beam along the emitter axis with the RF emitter.

### DESCRIPTION OF THE DRAWINGS

FIG. 1 illustrates an example antenna assembly in a first position having a first gain.
FIG. 2 illustrates the antenna assembly of FIG. 1 in a second position having a second gain.
FIG. 3 illustrates another example antenna assembly.
FIG. 4 illustrates an example method of operating the antenna assembly of FIG. 1.

Some embodiments of the present disclosure are now described, by way of example only, and with reference to the accompanying drawings. The same reference number represents the same element or the same type of element on all drawings.

### DESCRIPTION

The Figures and the following description illustrate specific exemplary embodiments of the disclosure. A person of ordinary skill in the art will be able to devise various arrangements that, although not explicitly described or shown herein, embody the principles of the disclosure and are included within the scope of the disclosure. Furthermore, any examples described herein are intended to aid in understanding the principles of the disclosure and are to be construed as being without limitation to such specifically recited examples and conditions. As a result, the disclosure is not limited to the specific embodiments or examples described below but by the claims and their equivalents.

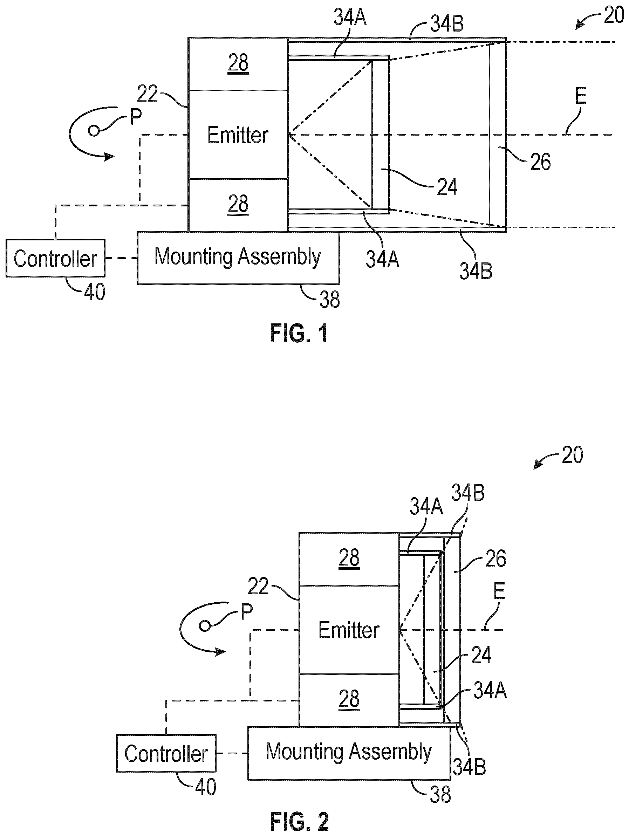

FIG. 1 illustrates an adjustable gain antenna assembly 20. The antenna assembly 20 includes an RF emitter 22, a first refractive lens 24, a second refractive lens 26, and a drive mechanism 28 for positioning the first and second refractive lens 24, 26 relative to the RF emitter 22. In the illustrated example, the RF emitter 22 is a single aperture RF emitter such that it emits RF beams at a range of frequencies limited to a single band but at multiple frequencies, e.g., GPS patch antennas. In one example, the RF emitter 22 is a circular horn antenna and is configured to emit an RF signal having a frequency range of between 26.5-40 gigahertz (GHz) along the Ka band. The RF emitter 22 is also configured to emit the RF beams along an emitter axis E that extends through the first and second refractive lens 24, 26. The RF emitter 22 can also generate RF beams with one of a circular polarization, such as left or right-handed circular polarization, a linear polarization, or an elliptical polarization.

The first and second refractive lens 24, 26 are positioned along the emitter axis E with the first refractive lens 24 located intermediate or between the RF emitter 22 and the second refractive lens 26. In one example, the first and second refractive lens 24, 26 are comprised of at least one of a polylactic acid (PLA) material or an acrylonitrile butadiene styrene (ABS) material. The first and second refractive lens 24, 26 are each coated in an RF-transparent material, such as Aptek 2515AB, that can protect antenna material from environmental conditions while still allowing for the transmission of RF beams. The first and second refractive lens 24, 26 can be made in an injection molding process or from a three-dimensional (3D) printing process.

In one example, the first refractive lens 24 includes a first face that faces the RF emitter 22 for accepting the RF signal and a second face located opposite the first face. Similarly, the second refractive lens 26 includes a first face that faces the first refractive lens 24 and the RF emitter 22 and a second face located opposite the first face.

A drive mechanism 28 mechanically links the first refractive lens 24 and the second refractive lens 26 for movement relative to the RF emitter 22 to vary a focal length and therefore a gain of the antenna assembly 20. In the illustrated example, the drive mechanism 28 utilizes a first set of linear actuators 34A moveable by at least one drive motor to position the first refractive lens 24 and a second set of linear actuators 34B to position the second refractive lens 26 longitudinally along the emitter axis E to vary the gain of the RF emitter 22. In one example, the linear actuators are telescopic, and, in another example, the linear actuators included threaded shafts that are rotatably driven.

A controller 40 communicates with the drive mechanism 28 to control the operation of the drive mechanism 28. Any of the various control elements (e.g., electrical, or electronic components) shown in the figures or described herein may be implemented as hardware, a processor implementing software, a processor implementing firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-transitory computer readable medium, non-volatile storage, logic, or some other physical hardware component or module.

The antenna assembly 20 attached to a mounting assembly 38 to rotate the antenna assembly 20 about a point P to vary and azimuth angle and an elevation angle of the RF beams traveling through the first and second refractive lens 24, 26. Movement of the antenna assembly 20 about the mounting assembly 38 can be managed by the controller 40, which is in electrical communication with the mounting assembly 38. This allows for aiming the antenna assembly 20 in a given direction or for movement of the antenna assembly to one of a plurality of different rotational positions depending on the application. This can be helpful when using the antenna assembly 20 in an adaptive radar configuration. In particular, the antenna assembly 20 can operate at low gain for performing a broad target search and can then adjust to a high gain for more precise tracking of an object. A feature of the adjustability of the gain of the antenna assembly 20 is the ability to perform multiple functions with a single antenna assembly 20.

The antenna assembly 20 can also be used for synthetic aperture radar (SAR) imagery to detect physical properties of an object. The antenna assembly 20 can be used with a low gain to obtain imagery over a wide area and can then adjust to a high gain to create a zoomed image that focuses on a smaller area.

Furthermore, the antenna assembly 20 can be used for crosslink communications. For crosslink communications, the antenna assembly 20 can be in a low gain configuration for radar pose detection and then transition to a high gain for high-speed communications.

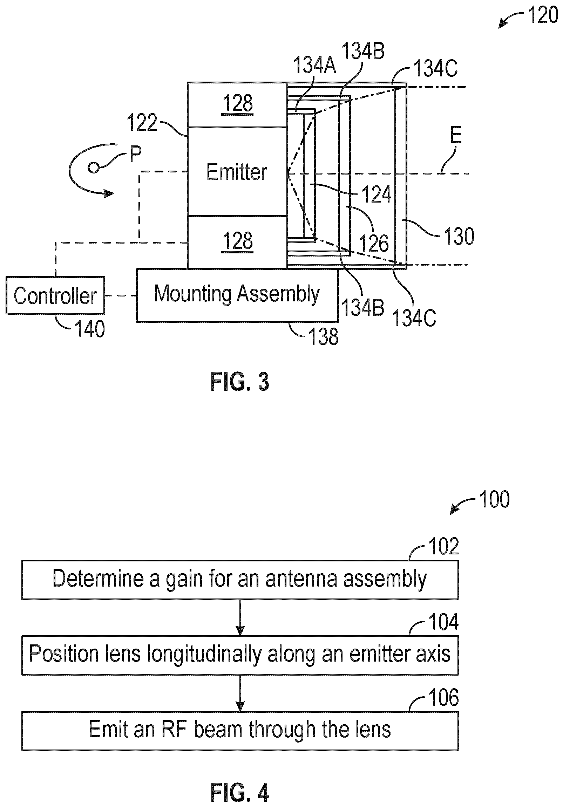

Figure 3 illustrates another example antenna assembly 120. The antenna assembly 120 is similar to the antenna assembly 20 except where noted below or shown in the FIGS. Similar items between the antenna assembly 20 and the antenna assembly 120 will include like numbers with the addition of a leading "1". The assembly 120 includes an RF emitter 122, a first refractive lens 124, a second refractive lens 126, a third refractive lens 130, and a drive mechanism 128. The drive mechanism 128 positions the first, second, and third refractive lens 124, 126, 130 relative to the RF emitter 122 along an emitter axis E to vary the gain of the antenna assembly 120 with first, second, and third sets of linear actuators 134A, 134B, 134C, respectively. The addition of the third refractive lens 130 in the assembly 120 allows for greater variation in gain, such as when there are size packaging constraints for the antenna assembly 120.

FIG. 4 illustrates an example method 100 of operating either of the antenna assembly 20 or 120. The method 100 includes determining a gain for the antenna assembly 20, 120 (Block 102). The gain for the antenna assemblies 20, 120 will depend on the application, such as the applications described above, and whether the application is better suited for high, low, or another variation in gain for the antenna assembly.

Once the gain has been determined, the method 100 positions the lens 24, 26, 124, 126, 130 longitudinally along the emitter axis E for the emitter 22, 122 (Block 104). The position of each of the lens 24, 26, 124, 126, 130 will determine the gain the antenna assembly 20, 120 produces. The longitudinal positions for all of the lens 24, 26, 124, 126, 130 can be predetermined by the controller 40, 140 or selected depending on the given application.

With the refractive lens 24, 26, 124, 126, 130 positioned longitudinally along the emitter axis E, the emitter 22, 122 can then emit an RF beam that travels through the lens 24, 26, 124, 126, 130 (Block 106). A position of the antenna assemblies 20, 120 can also be varied about the point P with the mounting assembly 38, 138 to control aiming a field of view of the RF beam for a given application.

The following Clauses provide example configurations of antenna assemblies and methods for operating the antenna assemblies of FIGS. 1-4.

Clause 1: An adjustable gain antenna comprising: an RF emitter configured to emit an RF signal along an emitter axis; a first refractive lens having an optical axis collinear with the emitter axis; a second refractive lens having an optical axis collinear with the emitter axis with the first refractive lens located between the RF emitter and the second refractive lens; and a drive mechanism mechanically linked to the first refractive lens and the second refractive lens, wherein the drive mechanism is configured to move the first refractive lens and the second refractive lens longitudinally along the emitter axis to vary a gain of the RF emitter.

Clause 2: The antenna of claim 1, wherein the first refractive lens and the second refractive lens are comprised of at least one of PLA (polylactic acid) or ABS (acrylonitrile butadiene styrene).

Clause 3: The antenna of any of clauses 1-2, wherein the first refractive lens and the second refractive lens are each coated in an RF-transparent material.

Clause 4: The antenna of any of clauses 1-3, wherein the RF-transparent material includes Aptek 2515AB.

Clause 5: The antenna of any of clauses 1-4, wherein the RF emitter is a single aperture RF emitter.

Clause 6: The antenna of any of clauses 1-5, wherein the RF emitter is configured to generate a circular polarization.

Clause 7: The antenna of any of clauses 1-6, wherein the RF emitter is configured to generate a linear polarization.

Clause 8: The antenna of any of clauses 1-7, wherein the RF emitter is configured to generate an elliptical polarization.

Clause 9: The antenna of any of clauses 1-8, wherein the first refractive lens and the second refractive lens are injection molded.

Clause 10: The antenna of any of clauses 1-9, wherein the first refractive lens and the second refractive lens are 3D printed.

Clause 11: The antenna of any of clauses 1-10, wherein the RF emitter is circular horn antenna.

Clause 12: The antenna of any of clauses 1-11, wherein the RF signal includes a frequency range of 26.5-40 gigahertz (GHz).

Clause 13: The antenna of any of clauses 1-12, including at least one additional refractive lens positioned along the emitter axis with the drive mechanism configured to adjust the at least one additional refractive lens.

Clause 14: The antenna of any of clauses 1-13, including a mounting assembly for selecting a field of view of the antenna.

Clause 15: A method of operating an antenna assembly, the method comprising: determining a gain for the antenna assembly; positioning at least one of a first refractive lens or a second refractive lens each in a first longitudinal position along an emitter axis of an RF emitter; and emitting an RF beam along the emitter axis with the RF emitter.

Clause 16. The method of clause 15, including positioning both the first refractive lens and the second refractive lens along the emitter axis.

Clause 17. The method of any of clauses 15-16, including rotating the antenna assembly about a point to vary a field of view of the antenna assembly in the azimuth and elevation angles.

Clause 18. The method of any of clauses 15-17, wherein the RF emitter is a single aperture RF emitter.

Clause 19. The method of any of clauses 15-18, including positioning the first refractive lens and the second refractive lens each in a second longitudinal position along the emitter axis to generate a second gain.

Clause 20. An antenna assembly comprising: an RF emitter configured to emit an RF signal along an emitter axis; a first refractive lens having an optical axis collinear with the emitter axis; a second refractive lens having an optical axis collinear with the emitter axis with the first refractive lens located between the RF emitter and the second refractive lens; and a drive mechanism mechanically linked to the first refractive lens and the second refractive lens, wherein the drive mechanism is configured to move the first refractive lens and the second refractive lens longitudinally along the emitter axis to vary a gain of the RF emitter; a mounting assembly for selecting a field of view of an adjustable gain antenna; and a controller configured to: determine a gain for the antenna assembly; position at least one of a first refractive lens or a second refractive lens each in a first longitudinal position along an emitter axis of an RF emitter; and direct an RF beam along the emitter axis with the RF emitter.

While various embodiments have been described, the description is intended to be exemplary rather than limiting. It will be apparent to those of ordinary skill in the art that many more embodiments and implementations are possible that are within the scope of the embodiments. Any feature of any embodiment may be used in combination with or substituted for any other feature or element in any other embodiment unless specifically restricted. Accordingly, the embodiments are not to be restricted except in light of the attached claims and their equivalents. Also, various modifications and changes may be made within the scope of the attached claims.

## Claims

1. An adjustable gain antenna comprising:
an RF emitter (22, 122) configured to emit an RF signal along an emitter axis (E);
a first refractive lens (24, 124) having an optical axis collinear with the emitter axis (E);
a second refractive lens (26, 126) having an optical axis collinear with the emitter axis (E) with the first refractive lens (24, 124) located between the RF emitter (22, 122) and the second refractive lens (26, 126); and
a drive mechanism (28,128) mechanically linked to the first refractive lens (24, 124) and the second refractive lens (26, 126), wherein the drive mechanism (28, 128) is configured to move the first refractive lens (24, 124) and the second refractive lens (26, 126) longitudinally along the emitter (22, 122) axis to vary a gain of the RF emitter (22, 122).

2. The antenna of claim 1, wherein the first refractive lens (24, 124) and the second refractive lens (26, 126) are comprised of at least one of PLA (polylactic acid) or ABS (acrylonitrile butadiene styrene).

3. The antenna of claim 1 or 2, wherein the first refractive lens (24, 124) and the second refractive lens (26, 126) are each coated in an RF-transparent material; and optionally wherein the RF-transparent material includes Aptek 2515AB.

4. The antenna of any preceding claim wherein the RF emitter (22, 122) is configured to generate a circular polarization; or wherein the RF emitter (22, 122) is configured to generate a linear polarization; or wherein the RF emitter (22, 122) is configured to generate an elliptical polarization.

5. The antenna of any preceding claim, wherein the first refractive lens (24, 124) and the second refractive lens (26, 126) are injection molded ; or wherein the first refractive lens (24, 124) and the second refractive lens (26, 126) are 3D printed.

6. The antenna of any preceding claim, wherein the RF emitter (22, 122) is circular horn antenna.

7. The antenna of any preceding claim, wherein the RF signal includes a frequency range of 26.5-40 gigahertz (GHz).

8. The antenna of any preceding claim, including at least one additional refractive lens (130) positioned along the emitter (22, 122) axis with the drive mechanism (28, 128) configured to adjust the at least one additional refractive lens (130).

9. The antenna of any preceding claim, including a mounting assembly (38, 138) for selecting a field of view of the antenna.

10. A method (100) of operating an antenna assembly (20, 120), the method (100) comprising:
determining a gain for the antenna assembly (20, 120);
positioning at least one of a first refractive lens (24, 124) or a second refractive (26, 126) each in a first longitudinal position along an emitter (22, 122) axis of an RF emitter (22, 122); and
emitting an RF beam along the emitter (22, 122) axis with the RF emitter (22, 122).

11. The method (100) of claim 10, including positioning both the first refractive lens (24, 124) and the second refractive lens (26, 126) along the emitter axis (E).

12. The method (100) of claim 11, including rotating the antenna assembly (20, 120) about a point to vary a field of view of the antenna assembly (20, 120) in the azimuth and elevation angles.

13. The antenna of any of claims 1 to 9, or the method (100) of any of claims 10 to 12, wherein the RF emitter (22, 122) is a single aperture RF emitter (22, 122).

14. The method (100) of any of claims 11 to 13, including positioning the first refractive lens (24, 124) and the second refractive lens (26, 126) each in a second longitudinal position along the emitter (22, 122) axis to generate a second gain.

15. An antenna assembly (20, 120) comprising:
an adjustable gain antenna of any of claims 1 to 8;
a mounting assembly (38, 120, 138) for selecting a field of view of an adjustable gain antenna; and
a controller (40, 140) configured to:
determine a gain for the antenna assembly (20, 120);
position at least one of a first refractive lens (24, 124) or a second refractive lens (26, 126) each in a first longitudinal position along an emitter axis (E) of the RF emitter (22, 122); and
direct an RF beam along the emitter axis (E) with the RF emitter (22, 122).
